# FASCICULE DE BREVET EUROPEEN

(11) **EP 1 318 335 B1**
(45) Date de publication et mention de la délivrance du brevet: **15.09.2004**
(21) Numéro de dépôt: 02293019.2
(22) Date de dépôt: 06.12.2002
(51) Int. Cl.: F16H 61/28, F16H 61/32, B60K 41/22

(54) **Boîte de vitesses automatisée à passages sous couple**
Automatisiertes Getriebe mit Schaltungen ohne Drehmomentunterbrechung
Automated gearbox with powershifting

(30) Priorité: 07.12.2001 FR 0115828
(43) Date de publication de la demande: 11.06.2003
(73) Titulaire: Renault s.a.s., 92100 Boulogne Billancourt (FR)
(72) Inventeur: Raoul, Michel, 78990 Elancourt (FR)

(56) Documents cités:
- DE-A- 19 627 980
- FR-A- 2 754 956
- FR-A- 2 777 834
- US-A- 2 649 813

## Description

La présente invention concerne une boîte de vitesses automatisée, notamment pour véhicule automobile, comportant au moins un actionneur de passage capable de fournir l'énergie mécanique et la force nécessaires aux passages des vitesses.

Plus précisément, cette invention a pour objet une boîte de vitesses automatisée à passages sous couple, reliée par un embrayage à un moteur d'entraînement, comprenant plusieurs axes de passage reliés mécaniquement à des axes de fourchettes, dont un axe de passage actionné manuellement par le conducteur et au moins un axe de passage déplacé en rotation par une unité motrice.

Elle trouve une application privilégiée, mais non limitative, sur une boîte de vitesses « robotisée », dans laquelle une partie des opérations de passage des vitesses est prise en charge par des systèmes d'actionnement électromécaniques placés sous le contrôle d'un calculateur.

Par la publication FR 2777 834, on connaît un système d'actionnement électromécanique pour boîte de vitesses comportant une unité motrice, associée d'une part à un système élastique d'emmagasinage de son énergie mécanique, apte à restituer cette énergie pour assurer sélectivement les dites commandes automatiques par d'une timonerie, respectivement de sélection et de passage, et d'autre part à un interrupteur de fin de course propre à provoquer l'apparition d'un signal représentatif, selon le cas, de l'état comprimé (emmagasinage d'énergie) dudit système élastique, de l'arrivée en butée de la dite unité motrice, ou du fait que la sélection ou l'engagement du rapport souhaité de la boîte a bien été obtenu.

Cette publication précise également que le système élastique, dont la précharge et la raideur sont connues, permettra ainsi de mieux maîtriser les efforts de sélection de même que les efforts de synchronisation lors du passage des vitesses, éventuellement en coopération avec un capteur de position de l'unité motrice à motoréducteur n'ayant pas à être asservie en effort, mais seulement en position ; le système élastique uniformise alors automatiquement les efforts demandés à l'unité motrice.

L'actionneur électromécanique décrit dans la publication FR 2777 834, dispose donc d'un système d'accumulation d'énergie à détente rapide et à arrêt contrôlé, permettant d'assurer le passage des vitesses sans accroissement de la puissance délivrée par l'unité motrice, ni ralentissement de celle-ci.

Par la publication FR 2754 956, on connaît par ailleurs un synchroniseur dans lequel chaque anneau de synchronisation transforme le couple reçu d'un moyeu en poussée axiale contre un pignon, de façon à transmettre lui-même le couple moteur à ce pignon en exerçant sur celui-ci une pression constante.

Un tel synchroniseur nécessite une commande très précise, et doit être stable et irréversible dans toutes les positions. Sa commande ne peut donc se satisfaire d'un actionneur électromagnétique connu, comme par exemple celui de la publication FR 2777834.

En effet, l'actionneur décrit dans la publication FR 2777834 ne permet pas de contrôler en permanence l'effort appliqué au baladeur. En particulier, il n'est pas stable et irréversible dans toutes les positions du synchroniseur commandé par celui-ci. Il n'est donc pas capable d'assurer dans de bonnes conditions la commande d'un dispositif de synchronisation, et de transmission de couple par simple adhérence (sans crabotage du pignon fou par le baladeur), tel que décrit dans la publication FR 2754 956. Le document US-A-2649813 décrit les caractéristiques techniques exposées dans le préambule de la revendication 1.

Il est donc avantageux de contrôler à chaque instant la poussée exercée par une fourchette de boîte de vitesses sur des moyens de synchronisation et de transmission de couple.

Par ailleurs, on peut prévoir que parmi les axes de passage reliés mécaniquement à des axes de fourchettes, un axe de passage particulier soit actionné manuellement par le conducteur, tandis qu'au au moins un autre axe dc passage soit déplacé en rotation par une unité motrice, et que des moyens de couplage élastiques soient prévus entre cette unité motrice et l'axe de passage correspondant.

Toutefois, une telle boîte de vitesses, de même que toutes les boîtes de vitesses automatisées à embrayage d'entrée et à passages sous couple, nécessite des moyens spécifiques d'actionnement de cet embrayage, ces moyens étant placés comme les autres actionneurs sous le contrôle du calculateur de la transmission.

La présente invention vise à simplifier le système d'actionnement d'une boîte de vitesses automatisée à passages sous coupleassociée à un embrayage d'entrée

Dans ce but, elle propose de disposer dans la boîte un axe de commande d'embrayage actionné par l'unité motrice d'un des actionneurs de passage.

Selon un mode de réalisation particulier de l'invention, un axe de passage de la boîte motorisé porte un doigt de passage

susceptible d'être placé dans un crabot d'un axe de fourchette ou dans un crabot de l'axe de commande d'embrayage.

L'unité motrice concernée peut comporter un actionneur capable de déplacer axialement l'axe correspondant pour mettre le doigt de passage dans l'un de ces crabots.

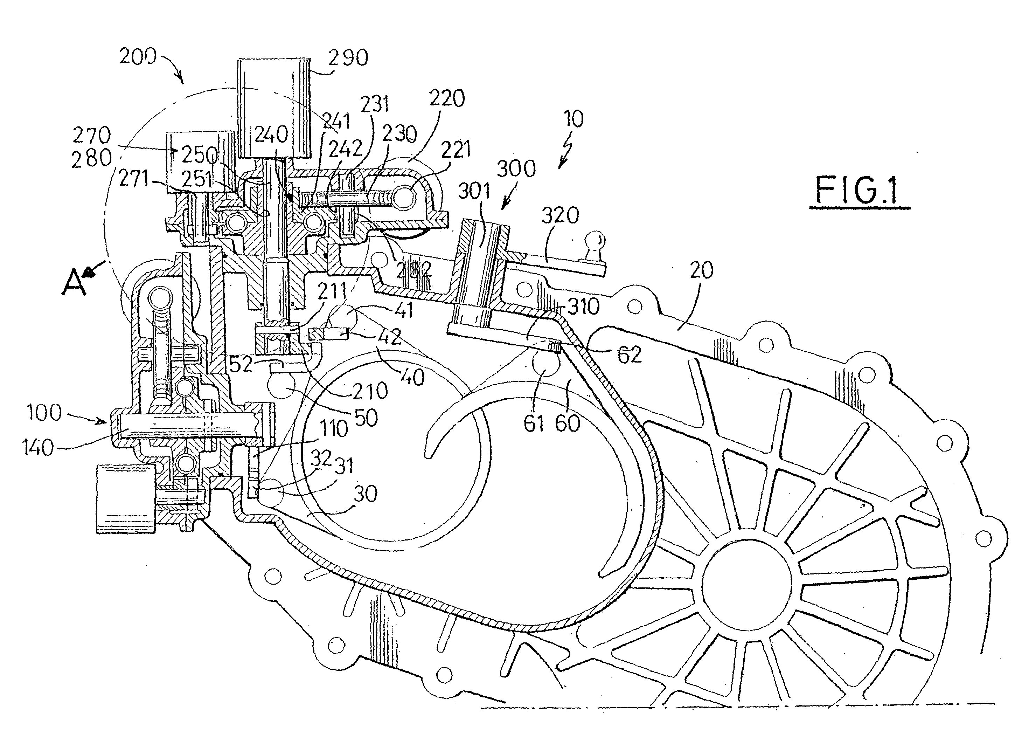

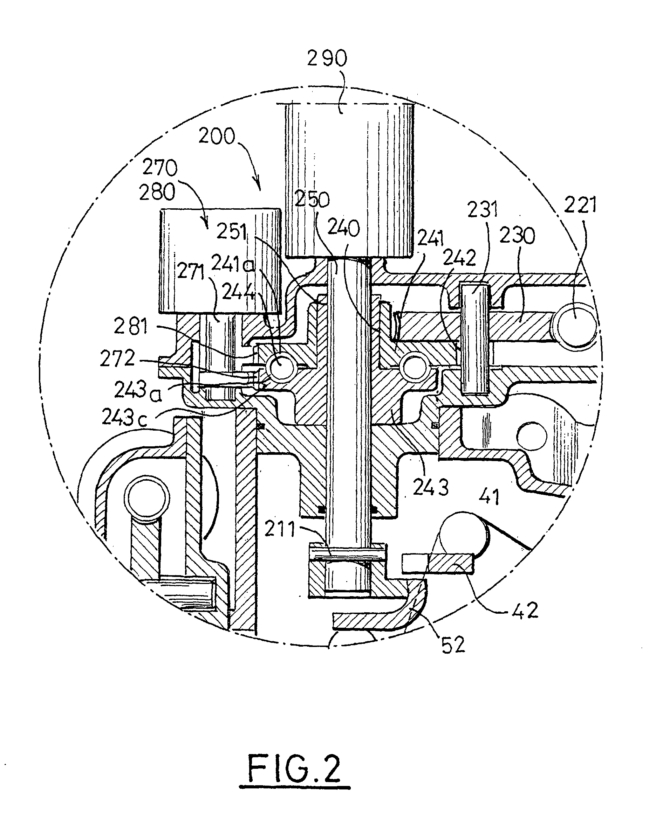

D'autres caractéristiques et avantages de la présente invention apparaîtront clairement à la lecture de la description suivante d'un mode de réalisation particulier de celle-ci, en liaison avec la figure unique.

Sur la figure on voit l'ensemble du dispositif de commande 10 pour une boîte de vitesses, comportant un carter 20, contenant une première fourchette 30 de commande du baladeur des rapports de deuxième et de quatrième. La fourchette 30 est portée par un axe 31 comprenant un crabot 32 en liaison avec un premier dispositif de commande 100 par l'intermédiaire du doigt 110 porté par l'axe 140.

Le dispositif de commande comprend une deuxième fourchette 40 de commande du baladeur des rapports de troisième et de cinquième. La fourchette 40 est portée par un axe 41 comprenant un crabot 42 en liaison avec un deuxième dispositif de commande 200 par l'intermédiaire du doigt 210 porté par l'axe 250.

Une troisième fourchette (non représentée) commande l'embrayage d'entrée. Cette fourchette est portée par un troisième axe 50 comprenant un crabot 52 également en liaison avec le deuxième dispositif de commande 200 par l'intermédiaire du doigt 210 porté par l'axe 250.

Une quatrième fourchette 60 commande le baladeur des rapports de première et de marche arrière. Elle est portée par un axe 61 comprenant un crabot 62 en liaison avec un dispositif de commande 300 par l'intermédiaire du doigt 310.

L'ensemble du dispositif comprend deux systèmes différents, seul le second 200 est décrit ci-dessous. Il diffère seulement du premier par la présence d'un actionneur 290 donnant au doigt de commande 210 deux positions distinctes en liaison avec les crabots 42 ou 52.

Le mécanisme 200 comprend une source d'énergie, constituée d'un moteur électrique 220. Le moteur 220 porte sur son axe un filet 221 constituant avec une roue dentée 230 un premier réducteur à vis sans fin. Elle est soutenue par un axe 231 qui porte une deuxième denture 232 d'entrée d'un second réducteur en liaison avec la denture 242 du flasque d'entrée 241 du système d'accouplement élastique 240.

Le flasque 241, guidé par le flasque 243, est libre en rotation par rapport à ce dernier. L'accouplement élastique entre les deux flasques d'entrée 241 et de sortie 243, est réalisé par les ressorts 244 disposés dans des évidements 241a et 243a en vis-à-vis.

Le flasque de sortie 243 est porté par l'axe 250. L'entraînement de l'axe en rotation est réalisé par les cannelures 251. L'axe peut ainsi coulisser par rapport au flasque 243.

L'axe 250 s'étend en partie dans la boîte, et supporte le doigt 210, lié en translation et en rotation par la goupille 211. En tournant et en coopérant avec soit les crabots 42 ou 52, le doigt 210 assure le déplacement axial soit de l'axe 41 et de la fourchette 40 de commande des rapports de troisième et de cinquième, soit de l'axe 50 de commande de l'embrayage de liaison du moteur et de la boîte de vitesses.

Le positionnement angulaire précis en position neutre ou au repos du doigt de commande 210, est déterminé par l'état électrique du dispositif de mesure 270, par exemple un potentiomètre, comportant un axe 271dont le secteur denté 272 coopère avec le secteur denté 243c du flasque de sortie 243.

L'état de tension de l'accouplement élastique et par conséquent, la poussée axiale exercée par la fourchette est donné par l'état électrique d'un second capteur de position relative 280, par exemple un second potentiomètre. Ce second capteur est lié en rotation, d'une part à la denture 242 du flasque d'entrée 241 par l'intermédiaire d'un secteur denté 281, et d'autre part à l'axe 271 du premier dispositif de mesure. Ainsi le second dispositif de mesure nous informe du déplacement angulaire relatif des deux flasques.

La boîte comporte donc des moyens de repérage du premier et du second flasque permettant de contrôler à chaque instant la poussée exercée par les fourchettes sur les moyens de synchronisation et de transmission de couple.

Lorsque le système d'accouplement élastique tourne pour rattraper les jeux, le capteur de position relative 280 indique une absence de tension des ressorts, alors qu'un capteur de position neutre 270 indique que cette dernière a été quittée.

La position neutre de la fourchette est donc donnée par un capteur de position angulaire 270 du deuxième flasque 243, tandis que la poussée de la fourchette est évaluée par un capteur de position angulaire relative 280 des deux flasques 241 et 243.

De plus, comme indiqué plus haut, le synchroniseur commandé par la fourchette 30 peut avantageusement être du type « à poussée axiale sans crabotage », dans lequel la synchronisation et la transmission de couple sont obtenues uniquement par frottement et adhérence de surfaces de friction.

Le doigt 210 porté par l'axe 250, peut se déplacer verticalement, pour se mettre soit dans le crabot 42 soit dans le crabot 52 sous l'action d'un second actionneur 290, par exemple un électro-aimant. Il comporte (non représentés) des moyens propres de repérage de la position du doigt, par exemple des contacteurs électriques. Il comporte également un moyen de rappel mécanique, de type ressort, ramenant le doigt dans une position privilégiée, la plus utilisée, de préférence celle correspondant à l'actionnement du crabot 42 de passage des rapports de troisième et cinquième.

Le deuxième dispositif de commande 100 de la fourchette des rapports de seconde et de quatrième est en tout point similaire au dispositif de commande de la fourchette des rapports de troisième et de cinquième en dehors du fait qu'il n'a pas d'actionneur 290 de sélection de crabot. Ce deuxième dispositif n'est donc pas décrit davantage.

Les deux dispositifs sont indépendants et peuvent fonctionner, de manière séparée ou simultanée à partir des consignes d'une unité de contrôle centrale.

Dans le cas particulier où ces mécanismes sont combinés avec les coupleurs coniques mentionnés ci-dessus, capables de transmettre le couple du moteur sans crabotage et sans ouverture de l'embrayage, il est possible de réaliser un basculement du couple moteur d'un coupleur sur l'autre, et de réaliser des passages de vitesses sous couple.

Toujours dans ce cas, il est possible d'utiliser le même actionneur pour commander ou l'embrayage d'entrée ou la fourchette des rapports de troisième cinquième. Cette disposition est très avantageuse économiquement, car au lieu de devoir prévoir un actionneur complet indépendant pour l'embrayage, il suffit d'aménager l'actionneur des passages troisième/cinquième en lui ajoutant un dispositif simple, tel un électro-aimant. Ainsi, lorsque le véhicule est à l'arrêt ou en train de s'élancer en marche avant ou en marche arrière, l'actionneur 200 manoeuvre l'embrayage. Lorsque le rapport de deuxième est engagé le doigt de passage 210 se déplace du crabot de fourchette d'embrayage 52 au crabot de fourchette des rapports de troisième et de cinquième 42 pour préparer le passage du rapport de troisième. Lors du passage du rapport de seconde au rapport de première, le doigt de passage 210 se déplace du crabot de fourchette 42 des rapports de troisième et de cinquième au crabot de fourchette 52 d'embrayage pour préparer l'éventuel besoin d'actionnement de l'embrayage, par exemple en cas d'arrêt du véhicule.

Le quatrième actionneur 300, est composé d'un axe 301 supporté par le carter 20, un doigt 310 lié à l'axe 301 par un moyen quelconque coopérant avec le crabot 62 permettant d'actionner la fourchette 60 des rapports de première et de marche arrière. A l'extérieur le levier 320 fixé à l'axe 301 est le lien avec un organe de commande ( non représenté) de type manuel à câble ou à tringle permettant l'intervention directe du conducteur.

Cette partie est liée mécaniquement au levier de commande. Le choix du rapport de marche arrière par le conducteur se traduit par un mouvement du baladeur vers le pignon de marche arrière, et la liaison peut être réalisée par un dispositif de type coupleur conique ou de type classique à crabot.

Le choix du rapport de première se traduit par un mouvement du baladeur vers le pignon de première. Conformément à l'invention, lé baladeur est maintenu dans sa position de rapport de première engagée lorsque l'unité de gestion contrôlant les actionneurs déclenche le passage d'un autre rapport.

Ce type de liaison entre le pignon du premier rapport et l'arbre porteur peut être par exemple assurée par une roue libre, permettant avantageusement à l'unité de contrôle de considérer que le choix de l'engagement du rapport de première est équivalent au choix de l'engagement de tous les rapports de marche avant.

Selon un mode de réalisation préféré de l'invention, les axes de passage des second, troisième, quatrième, et cinquième rapports de marche avant peuvent donc être actionnés par des unités motrices, tandis que le premier rapport de marche avant et la marche arrière sont engagées manuellement.

Dans ce cas particulier, l'engagement du rapport de première est déclaré à une unité de contrôle comme une intention de passer en marche avant, tandis que les moyens de consigne du pignon de première permettent de laisser le baladeur de ce rapport en position engagée quelque soit le rapport de marche avant en action.

Ainsi, l'unité de gestion des passages des vitesses sollicite l'unité motrice 100 pour passer du rapport de première au rapport de deuxième, et sollicite l'actionneur 290 pour déplacer le doigt 210 de sa position dans le crabot 52 de commande d'embrayage à sa position dans le crabot 42 de commande du rapport de troisième.

A l'inverse, l'unité des gestion des passages des vitesses sollicite l'unité motrice 100 pour passer du rapport de deuxième au rapport de première, et sollicite l'actionneur 290 pour déplacer le doigt 210 de sa position dans le crabot 42 de commande du rapport de troisième à sa position dans le crabot 52 de commande d'embrayage.

Enfin, cette unité de gestion actionne simultanément les deux coupleurs du groupe de seconde/quatrième et du groupe de troisième/cinquième pour réaliser les passages seconde/troisième, troisième/quatrième, quatrième/cinquième, et réalise ainsi les changements les rapports montants sous couple.

Globalement, l'invention présente de nombreux avantages sur le plan de la sûreté de fonctionnement dans la mesure où une partie de la commande est manuelle et l'autre partie est automatisée. De nombreux cas de défaillances des actionneurs ou de leur commande, entraînant une immobilisation du véhicule, sont ainsi résolus.

## Revendications

1. Boîte de vitesses mécanique automatisée (10) à passages sous couple, reliée par un embrayage à un moteur d'entraînement, comprenant plusieurs axes de passage (140, 250, 301) reliés mécaniquement à des axes de fourchettes (31, 41, 61), dont un axe de passage (301) actionné manuellement par le conducteur et au moins un axe de passage (140, 250) déplacé en rotation par une unité motrice (100, 200), **caractérisée en ce qu'**elle comporte également un axe de commande d'embrayage (50) actionné par une unité motrice (200).

2. Boîte de vitesses mécanique selon la revendication 1, **caractérisée en ce qu'**un axe de passage (250) actionné par une unité motrice (200) porte un doigt de passage (210) susceptible d'être placé dans un crabot (42) d'un axe de fourchette (41), ou dans un crabot (52) de l'axe de commande d'embrayage (50).

3. Boîte de vitesses mécanique selon la revendication 2, **caractérisée en ce que** l'unité motrice (200) comporte un actionneur (290) capable de déplacer axialement l'axe (250) et de mettre le doigt de passage (210) dans l'un des crabots (42) ou (52).

4. Boîte de vitesses mécanique selon la revendication 3, **caractérisée en ce que** l'actionneur (290) possède des moyens de repérage de la position axiale du doigt de passage (210).

5. Boîte de vitesses mécanique selon la revendication 3 ou 4, **caractérisée en ce que** l'actionneur (290) possède des moyens de rappel mécanique du doigt de passage (210) dans une position privilégiée.

6. Boîte de vitesses mécanique, selon l'une des revendications précédentes, **caractérisée en ce** la même unité motrice (200) actionne l'axe (50) de commande d'embrayage, et l'axe de fourchette (41) commandant les rapports de troisième et de cinquième.

7. Boîte de vitesses selon l'une des revendications précédentes, **caractérisée en ce que** l'unité motrice (100) actionnant l'axe de fourchette de seconde/quatrième et l'actionneur (290) sont sollicitées lors du passage de première en seconde de manière à engager le coupleur de seconde et à déplacer le doigt (210) du crabot (52) de commande de l'axe d'embrayage au crabot (42) de commande de l'axe de fourchette des rapports de troisième/cinquième (41).

8. Boîte de vitesses selon l'une des revendications précédentes, **caractérisée en ce que** l'unité motrice (100) actionnant l'axe de fourchette de seconde quatrième, et l'actionneur (290) sont sollicités lors du passage de seconde en première, de manière à dégager le coupleur de seconde et à déplacer le doigt (210) du crabot (52) de commande de l'axe de fourchette des rapports de troisième/cinquième (41), au crabot de l'axe de commande d'embrayage.

## Patentansprüche

1. Mechanisches, automatisiertes Getriebe (10) mit Übergängen unter Drehmoment, welches über eine Kupplung mit einem Antriebsmotor verbunden ist, welches mehrere Übergangsachsen (140, 250, 301) aufweist, welche mechanisch mit Gabelachsen (31, 41, 61) verbunden sind, von denen eine Übergangsachse (301) manuell von dem Fahrer betätigt wird, und mindestens eine Übergangsachse (140, 250) in Drehung durch eine Antriebseinheit (100, 200) verstellt wird, **dadurch gekennzeichnet, dass** es ebenso eine Kupplungssteuerachse (50) aufweist, welche durch eine Antriebseinheit (200) betätigt wird.

2. Mechanisches Getriebe gemäß Anspruch 1, **dadurch gekennzeichnet, dass** eine Übergangsachse (250), welche durch eine Antriebseinheit (200) betätigt wird, einen Übergangsfinger (210) aufweist, der fähig ist, in einer Klaue (42) einer Gabelachse (41) eingesetzt zu werden, oder in einer Klaue (52) der Kupplungssteuerachse (50).

3. Mechanisches Getriebe gemäß Anspruch 2, **dadurch gekennzeichnet, dass** die Antriebseinheit (200) einen Betätiger (290) aufweist, der fähig ist, axial die Achse (250) zu verstellen, und den Übergangsfinger (210) in eine der Klauen (42) oder (52) zu setzen.

4. Mechanisches Getriebe gemäß Anspruch 3, **dadurch gekennzeichnet, dass** der Betätiger (290) Ortungsmittel der axialen Stellung des Übergangsfingers (210) aufweist.

5. Mechanisches Getriebe gemäß Anspruch 3 oder 4, **dadurch gekennzeichnet, dass** der Betätiger (290) mechanische Rückstellmittel des Übergangsfingers (210) in eine bevorzugte Stellung aufweist.

6. Mechanisches Getriebe gemäß einem der vorhergehenden Ansprüche, **dadurch gekennzeichnet, dass** die gleiche Antriebseinheit (200) die Kupplungssteuerachse (50) und die Gabelachse (41) betätigt, welche den dritten und den fünften Gang steuert.

7. Getriebe gemäß einem der vorhergehenden Ansprüche, **dadurch gekennzeichnet, dass** die Antriebseinheit (100), welche die Gabelachse des zweiten/vierten betätigt und der Betätiger (290) beim Übergang vom ersten Gang in einer Art und Weise belastet werden, um den Kuppler des zweiten in Eingriff zu bringen, und um den Finger (210) der Steuerklaue (52) der Kupplungsachse mit der Steuerklaue (42) der Gabelachse des dritten/fünften Gangs (41) zu verstellen.

8. Getriebe gemäß einem der vorhergehenden Ansprüche, **dadurch gekennzeichnet, dass** die Antriebseinheit (100), welche die Gabelachse des zweiten/vierten Gangs betätigt, und der Betätiger (290) während dem Übergang des zweiten Gangs in den ersten in solch einer Art und Weise belastet sind, um den Kuppler des zweiten auszukuppeln, und um den Finger (210) der Steuerklaue (52) der Gabelachse des dritten/fünften Gangs (41) an der Klaue der Kupplungssteuerachse zu verstellen.

## Claims

1. Automatic mechanical powershift gearbox (10), connected by a clutch to a driving engine, comprising several shifting shafts (140, 250, 301) mechanically connected to fork spindles (31, 41, 61), including one shifting shaft (301) actuated manually by the driver and at least one shifting shaft (140, 250) rotated by a power unit (100, 200), **characterised in that** it also comprises a clutch control spindle (50) actuated by a power unit (200).

2. Mechanical gearbox according to claim 1, **characterised in that** a shifting shaft (250) actuated by a power unit (200) holds a shifting finger (210) that can be placed in a fork spindle (41) dog clutch (42) or in a dog clutch (52) on the clutch control spindle (50).

3. Mechanical gearbox according to claim 2, **characterised in that** the power unit (200) comprises an actuator (290) that can axially move the shaft (250) and place the shifting finger (210) in one of the dog clutches (42) and (52).

4. Mechanical gearbox according to claim 3, **characterised in that** the actuator (290) has means of detecting the axial position of the shifting finger (210).

5. Mechanical gearbox according to claim 3 or 4, **characterised in that** the actuator (290) has mechanical means of returning the shifting finger (210) to a preferred position.

6. Mechanical gearbox according to any one of the previous claims, **characterised in that** the same power unit (200) actuates the clutch control spindle (50) and the fork spindle (41) controlling the third and fifth gears.

7. Gearbox according to any one of the previous claims, **characterised in that** the power unit (100) actuating the second/fourth fork spindle and the actuator (290) are acted on during the shift from first to second in such a way as to engage the second gear coupler and move the finger (210) from the clutch spindle control dog clutch (52) to the third/fifth gear fork spindle (41) control dog clutch (42).

8. Gearbox according to any one of the previous claims, **characterised in that** the power unit (100) actuating the second/fourth fork spindle and the actuator (290) are acted on during the shift from second to first in such a way as to disengage the second gear coupler and move the finger (210) from the third/fifth gear fork spindle (41) control dog clutch (52) to the clutch control spindle dog clutch. /
